## Europäisches Patentamt
## European Patent Office
## Office européen des brevets

(19)

(11) Numéro de publication: **0 003 192**
**B1**

(12) **FASCICULE DE BREVET EUROPEEN**

(45) Date de publication du fascicule du brevet: **21.09.83**

(51) Int. Cl.³: **F 16 L 33/02, F 16 B 2/08**

(21) Numéro de dépôt: **79400007.5**

(22) Date de dépôt: **04.01.79**

(54) **Collier de serrage réutilisable.**

(30) Priorité: **18.01.78 FR 7801401**

(43) Date de publication de la demande:
**25.07.79 Bulletin 79/15**

(45) Mention de la délivrance du brevet:
**21.09.83 Bulletin 83/38**

(84) Etats contractants désignés:
**DE GB NL**

(56) Documents cités:
**DE - A - 1 750 544**
**FR - A - 1 413 023**
**US - A - 3 402 436**
**US - A - 3 602 954**

(73) Titulaire: **Etablissements CAILLAU Société à responsabilité limitée dite:**
**4, rue Béranger**
**F-92100 Boulogne-Billancourt (FR)**

(72) Inventeur: **Irio, Francis**
**5, rue du Bac**
**F-36210 Chabris (FR)**
Inventeur: **Chene, Richard**
**La Boulay**
**F-41460 Selles-Saint-Denis (FR)**

(74) Mandataire: **Descourtieux, Philippe et al,**
**CABINET BEAU de LOMENIE 55 rue d'Amsterdam**
**F-75008 Paris (FR)**

Courier Press, Leamington Spa, England.

Collier de serrage réutilisable.

On connaît déjà, notamment par le brevet FR—A n° 789 138, un collier de serrage pour la fixation d'un manchon souple, par exemple une durite en caoutchouc sur un tuyau rigide. Un tel collier est constitué par une bande de métal enroulée sur elle-même, dont les extrémités sont rapprochées l'une de l'autre au moment du serrage. A cet effet, les deux extrémités de la bande sont pourvues de plis radiaux ou oreilles, lesquels sont traversés par une vis dont la tête prend appui sur l'une des oreilles, cependant qu'un écrou, prenant appui sur l'autre oreille, permet le rapprochement des extrémités de la bande.

Pour éviter au manchon à fixer de pénétrer dans le vide situé entre les deux oreilles, il est avantageusement prévu sur l'une d'elles un prolongement contrecoudé qui constitue une semelle située sur la périphérie du collier et s'étendant sensiblement entre les deux oreilles.

Un tel collier peut donc être démonté et réutilisé mais sa fabrication nécessite plusieurs pièces indépendantes et, d'autre part, son utilisation exige un temps appréciable de main-d'oeuvre.

On connaît d'autre part, notamment par la DEA 1 750 544, un collier de serrage dont la bande présente à ses extrémités deux plis radiaux, l'un d'eux comportant un prolongement terminé par un coude agrafé sur l'autre. Une telle disposition permet le serrage du collier à l'aide d'un outil en forme de pince qui vient rapprocher les deux plis radiaux l'un de l'autre en assurant une déformation permanente de la partie de la bande qui les relie.

On connaît également, par le brevet FR—A n° 1 413 023, un collier dont les extrémités sont constituées par des parties en U complémentaires, destinées à être emboîtées l'une dans l'autre. Après emboîtage, les bases des plis radiaux formés par les parties en U du collier sont rapprochées l'une de l'autre au moyen d'un outil en forme de pince, ce qui provoque un déformation permanente de ces parties en U et assure ainsi le serrage du collier.

Les colliers décrits dans la DE.A 1 750 544 aussi bien que ceux décrits dans le brevet FR—A 1 413 023 présentent cependant l'inconvénient de ne pas être facilement démontables et surtout de ne pas être réutilisables en raison de la déformation permanente de la bande provoquée au moment du serrage.

On rappellera enfin que certains colliers sont aujourd'hui fréquemment fabriqués à partir d'un tube dont on découpe des "tranches", mais une telle fabrication présente quelques inconvénients dans certains cas. D'un autre côté, les colliers décrits dans les publications évoquées plus haut peuvent être fabriqués à partir d'une bande qui est convenablement formée par roulage, emboutissage ou autres techniques analogues généralement très simples.

La présente invention vise à perfectionner les colliers de serrage dont la mise en place et le serrage ne nécessitent aucune déformation permanente et qui sont par conséquent susceptibles d'être réutilisés après démontage. Elle vise donc, tout en conservant la simplicité de fabrication par roulage, emboutissage ou autres techniques analogues, à obtenir un collier en une seule pièce dont le montage et le serrage soient réalisables à l'aide d'un simple outil du genre pince, sans exiger une main-d'oeuvre très qualifiée.

A cet effet, l'invention a pour objet un collier de serrage, réutilisable, constitué par une bande de métal enroulée sur elle-même et comportant au voisinage des extrémités de la bande deux plis radiaux ou oreilles. Une première oreille est coudée vers l'extérieur de la surface de la bande et présente un prolongement dirigé selon la périphérie du collier pour constituer une semelle qui s'étend au moins sur la distance séparant les deux oreilles, depuis la première oreille vers la seconde. La seconde oreille présente un prolongement sensiblement parallèle à la périphérie du collier et situé à une distance de celle-ci voisine de la hauteur d'une oreille, ce prolongement comportant à son extrémité un coude rabattu vers l'intérieur du collier.

Selon l'invention, à l'état non serré du collier, le prolongement de la seconde oreille s'étend seulement au voisinage et en deçà de la première oreille, cependant que le coude présente une faible longueur et fait un angle aigu avec ledit prolongement. Ainsi, grâce à un outil prenant appui sur les deux oreilles, le coude peut passer au-delà de la première oreille et s'accrocher sur celle-ci en prenant appui derrière elle. Le maintien du serrage du collier est alors obtenu sans aucune déformation permanente.

L'invention sera cependant mieux comprise et ses avantages ainsi que diverses caractéristiques secondaires apparaîtront au cours de la description qui va suivre de quelques modes de réalisation préférés donnés uniquement à titre d'exemple.

A cet effet, on se référera aux dessins annexés dans lesquels:

— la figure 1 est une vue schématique en élévation d'un collier selon l'invention;

— la figure 2 est une vue partielle en perspective agrandie de la portion extérieure de la bande située entre deux oreilles;

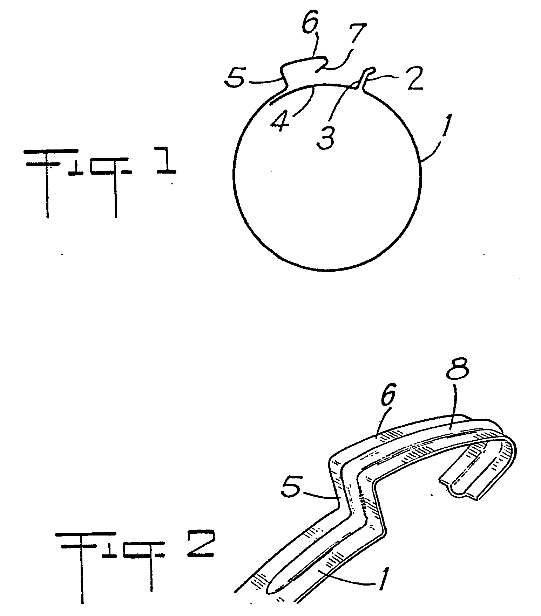

Si l'on se reporte tout d'abord à la figure 1, on voit que le collier est essentiellement constitué par une bande 1 de métal, qui est enroulée sur elle-même, dont les extrémités sont indépendantes l'une de l'autre. Au voisinage de l'une des extrémités, un pli radial ou oreille 2 est

coudé vers l'extérieur du collier sur une certaine hauteur. Un premier contrecoudage définit une deuxième partie 3 du pli radial, cependant qu'après un deuxième contrecoudage de la bande l'oreille 2—3 comporte un prolongement 4 dirigé selon la périphérie du collier vers l'autre extrémité de la bande 1.

Au voisinage de l'autre extrémité du collier, la bande présente un deuxième pli radial ou oreille 5 dont la hauteur est sensiblement égale à celle de la première oreille 2—3, de préférence légèrement supérieure. Un contrecoudage de la bande donne naissance, sur l'oreille 5, à un prolongement 6 qui s'étend à peu près parallèlement à la périphérie du collier. L'extrémité du prolongement 6 est coudée à nouveau, sensiblement vers l'intérieur du collier, suivant une portion 7 de faible longueur faisant de préférence un angle aigu avec le prolongement 6.

Conformément à ce qui est représenté sur la figure 2, le prolongement 6 de la seconde oreille comporte avantageusement une nervure longitudinale 8 de rigidification qui peut s'étendre jusqu'au coude 7 et qui évite une déformation, notamment par flexion, de cette partie, 5, 6, 7 du collier, après l'accrochage.

Cependant, ce prolongement 6 de la seconde oreille 5 s'étend, à l'état non serré, en deçà de la première oreille 2—3 qu'il ne recouvre donc pas. D'autre part, la première oreille 2—3 présente de préférence, comme on le voit sur la figure 1, une extrémité légèrement coudée. Il est évident cependant que l'oreille peut être radiale ou, au contraire, inclinée dans sa totalité pour former avec la périphérie de la bande un angle aigu voisin de celui de coude terminal 7 et de la portion 6.

Lors du serrage du collier, un outil en forme de pince prend appui sur les oreilles 2—3 et 5; le coude terminal 7 passe derrière l'oreille 2—3 dont l'extrémité coudée constitue ainsi un organe d'agrafage. Il n'existe donc aucune déformation permanente de la bande au cours du serrage, de sorte que le collier peut être réutilisé après dégrafage du coude 7 et de l'oreille 2—3 au moyen d'un outil approprié.

## Revendications

1. Collier de serrage réutilisable, constitué par une bande (1) de métal enroulée sur elle-même et comportant, au voisinage des deux extrémités de la bande, deux plis radiaux ou oreilles, cependant qu'une première oreille (2) est coudée vers l'extérieur de la surface de la bande et présente un prolongement (4) dirigé selon la périphérie du collier pour constituer une semelle qui s'étend au moins sur la distance séparant les deux oreilles, depuis ladite première oreille vers la seconde, et que la seconde oreille 5 présente un prolongement (6) sensiblement parallèle à la périphérie du collier (1) et situé à une distance de celle-ci voisine de la hauteur d'une oreille, ce prolongement comportant à son extrémité un coude (7) rabattu vers l'intérieur du collier, caractérisé en ce que, à l'état non serré du collier, ce prolongement s'étend seulement au voisinage et en deçà de la première oreille (2) et en ce que le coude (7) présente une faible longueur faisant un angle aigu avec le prolongement (6), de sorte que, grâce à un outil prenant appui sur les oreilles (2 et 5), ledit coude (7) peut passer au-delà de ladite première oreille (2) au cours de serrage du collier et s'accrocher sur cette oreille (2) en prenant appui derrière elle, ce qui assure le maintien du serrage du collier sans déformation permanente d'aucune partie du collier.

2. Collier selon la revendication 1, caractérisé en ce que la première oreille est contre-coudée de façon à être constituée de façon connue en soi par deux portions (2—3) de la bande adossées l'une à l'autre.

3. Collier selon l'une quelconque des revendications 1 et 2, caractérisé en ce que l'extrémité de l'oreille (2, 2—3) est légèrement coudée et constitue un organe d'agrafage pour le coude (7) du prolongement (6).

4. Collier selon l'une quelconque des revendications 1 à 3, caractérisé en ce que le prolongement de la seconde oreille (5) présente une nervure longitudinale (8) de rigidification s'étendans dans un sens, au moins sur la totalité de l'oreille (5) et, de préférence, jusqu'au coude (7) dans l'autre sens (4).

## Patentansprüche

1. Wiederverwendbarer Spannring aus einem in sich aufgerollten Metallband (1), das in Nähe seiner beiden Enden zwei radiale Umschläge oder Ansätze aufweist, wobei der erste Umschlag (2) von der Oberfläche des Bandes nach aussen zurückgebogen ist und eine in Umfangsrichtung des Spannrings verlaufende Verlängerung (4) aufweist zur Bildung einer Unterlage, die sich wenigstens über eine die beiden Umschläge trennende Strecke vom ersten Umschlag zum zweiten Umschlag erstreckt, und dass der zweite Umschlag (5) eine Verlängerung (6) aufweist, die in einem der Höhe eines Umschlags etwa gleichen Abstand im wesentlichen parallel zum Umfang des Spannrings (1) verläuft, wobei diese Verlängerung an ihrem Ende eine nach innen abgewinkelte Biegung (7) aufweist, dadurch gekennzeichnet, dass sich diese Verlängerung im nicht verspannten Zustand des Spannrings nur in der Nähe und diesseits des ersten Umschlags (2) erstreckt und dass die Biegung (7) eine geringe Länge aufweist und mit der Verlängerung (6) einen spitzen Winkel aufweist, so dass dank eines an den Umschlägen (2 und 5) abgestützten Werkzeugs die genannte Biegung (7) im Verlauf der Verspannung des Ringes über den genannten ersten Umschlag (2) hinausgehen und sich an diesem festhaken kann, indem sie sich hinter de Umschlag abstützt, wodurch die Verspannung des Ringes ohne bleibende Verformung irgendeines Teils des Ringes sichergestellt wird.

2. Spannring nach Anspruch 1, dadurch gekennzeichnet, dass der erste Umschlag doppelt gekröpft ist, so dass er in an sich bekannter Weise aus zwei aneinandergelehnten Teilen (2—3) des Bandes besteht.

3. Spannring nach einem der Ansprüche 1 und 2, dadurch gekennzeichnet, dass das Ende des Umschlags (2, 2—3) leicht gebogen ist und eine einhakendes Organ für die Biegung (7) der Verlängerung (6) bildet.

4. Spannring nach einem der Ansprüche 1 bis 3, dadurch gekennzeichnet, dass die Verlängerung des zweiten Umschlags (5) eine längsverlaufende Versteifungsrippe (8) aufweist, die sich in einer Richtung wenigstens über den gesamten Umschlag (5) und in der anderen Richtung (4) vorzugsweise bis zu der Biegung (7) erstreckt.

## Claims

1. Re-usable clamp, constituted by a wound-over strap (1) of metal and comprising, near the two ends of the strap, two radial folds or lugs, whereas a first lug (2) is bent so as to project externally from the surface of the strap and presents an extension (4) which follows the periphery of the clamp to constitute a sole-plate extending at least over the distance separating the two lugs, from the first lug towards the second lug, and whereas the second lug (5) presents an extension (6) substantially parallel to the periphery of the clamp (1) and situated at a distance therefrom which is nearly equal to the height of one lug, said extension being provided at its end with a hooked portion (7) bent towards the inside of the clamp, characterized in that, when the clamp is in an untightened position, said extension only extending close to but short of the first lug (2) and in that the hooked portion (7) is of short length forming an acute angle with the extension (6) so that, with a tool bearing against the lugs (2 and 5), the said hooked portion can pass over the said first lug (2) when the clamp is being tightened and hook on to said lug (2) resting against the back thereof, this holding the clamp tightly closed without any permanent deformation of any part of said clamp.

2. Clamp according to claim 1, characterized in that the first lug is counter-bent so as to be constituted in manner known per se by two back-to-back portions (2—3) of the strap.

3. Clamp according to claims 1 and 2, characterized in that the end of the lug (2, 2—3) is slightly bent and constitutes a fastening member for the hooked portion (7) of the extension (6).

4. Clamp according to any one of claims 1 to 3, characterized in that the extension of the second lug (5) presents a rigidifying longitudinal rib (8) which extends in one direction at least over the whole lug (5) and preferably as far as the hooked portion (7) in the other direction.

Fig 1

Fig 2